# EUROPÄISCHE PATENTSCHRIFT

(11) **EP 4 081 894 B1**
(45) Veröffentlichungstag und Bekanntmachung des Hinweises auf die Patenterteilung: **11.06.2025**
(21) Anmeldenummer: 19832969.0
(22) Anmeldetag: 23.12.2019
(51) Int. Cl.: G06F 3/147

(54) **ELEKTRONISCHES REGALETIKETT MIT AKTIONSAUSLÖSUNG**
ELECTRONIC SHELF LABEL TRIGGERING ACTIONS
SYSTÈME D'ÉTIQUETTE ÉLECTRONIQUE POUR ÉTAGÈRE GÉNÉRANT DES ACTIONS

(43) Veröffentlichungstag der Anmeldung: 02.11.2022
(60) Teilanmeldung: 25172549.5
(73) Patentinhaber: VusionGroup GmbH, 8072 Fernitz-Mellach (AT)
(72) Erfinder: RÖSSL, Andreas, 8072 Fernitz-Mellach (AT)
(74) Vertreter: Schneider, Michael
(86) Internationale Anmeldenummer: PCT/EP2019/086994
(87) Internationale Veröffentlichungsnummer: WO 2021/129934

(56) Entgegenhaltungen:
- KR-A- 20100 137 956
- US-A1- 2008 073 431
- US-A1- 2010 106 588

## Beschreibung

### Technisches Feld

Die Erfindung betrifft ein elektronisches Regaletikett mit Aktionsauslösung.

### Hintergrund.

Ein elektronisches Regaletiketten-System mit Aktionsauslösung zur Anzeige von Information mit Hilfe von elektronischen Regaletikettenanzeigen, nachfolgend kurz ESL-System genannt, wobei ESL für "Electronic Shelf Label" steht, ist beispielsweise aus der WO 2015/124197 A1 bekannt. Dieses ESL-System erlaubt mit Hilfe eines proprietären Zeitschlitz-Kommunikationsverfahrens einen extrem energiesparenden Betrieb der ESLs. Die ESLs sind in einem Geschäftslokal eines Supermarkts an Regalschienen korrespondierend zu Produkten angebracht und zeigen Produktinformation an. Die Aktionsauslösung bei den ESLs erfolgt in diesem ESL-System durch eine Befehlsübermittlung von einem Server an eines der ESLs, was zu einer Aktion im ESL führt, bei der z.B. ein Bildinhalt eines "Electronic-Paper-Displays" (abgekürzt EDP) geändert wird und nachfolgend über einen relativ langen Zeitraum im Wesentlichen ohne Energieaufnahme dargestellt wird.

Im Betrieb in einer realen Umgebung in einem Supermarkt hat es sich jedoch gezeigt, dass ESLs mitunter versehentlich oder auch bewusst von ihrer Sollposition entfernt werden, z.B. durch Fremdeinwirkung zu Boden fallen, oder auch an eine andere Position im Geschäftslokal vertragen werden und dort wieder an einer Regalschiene befestigt werden oder auf einem Regalboden oder auch einem Produktpräsentations-Tisch abgelegt werden. Hierbei hat es sich als problematisch erwiesen, dass die ESLs weiterhin ihren zuvor festgelegten Bildinhalt anzeigen, was mitunter zu Verwirrung oder Missverständnissen bei Kunden wie auch beim Personal des Supermarktes führen kann.

Die Erfindung hat sich die Aufgabe gestellt, ein verbessertes Regaletikett und ein verbessertes Regaletiketten-System bereitzustellen, bei dem die vorstehend genannten Probleme überwunden sind.

In den Patentanmeldungen US 2010/106 588 A1, US 2008/ 073 431 A1 und KR 2010/0 137 956 A werden elektronische Regaletiketten offenbart, die unter anderem Manipulationssensoren enthalten und im Falle einer erkannten Manipulation eine zentrale Stelle informieren und/oder eine spezielle Nachricht anzeigen.

### Zusammenfassung der Erfindung

Diese Aufgabe wird durch ein elektronisches Regaletikett, das aufweist eine Anzeige-Einheit, die zur Anzeige eines Bildinhalts ausgebildet ist, und ein Kommunikation-Modul, das zur funkbasierten Kommunikation zwecks Empfangs von Bilddaten, welche den Bildinhalt repräsentieren, und zur Übergabe der Bilddaten an die Anzeigeeinheit ausgebildet ist, dadurch gekennzeichnet, dass eine Detektor-Einheit vorgesehen ist, die zum Detektieren einer von einer Soll-Positionierung abweichenden Fehl-Positionierung des elektronischen Regaletikettes und bei Detektion der Fehl-Positionierung zum Abgeben eines Aktionssignals ausgebildet ist, und dass das elektronische Regaletikett bei Vorliegen des Aktionssignals zur Veränderung des Bildinhalts ausgebildet ist.

Die Aufgabe wird weiterhin gelöst durch ein elektronisches Regaletiketten-System, das zumindest ein erfindungsgemäßes Regaletikett aufweist.

Die Erfindung wird durch den unabhängigen Anspruch 1 definiert. Bevorzugte Ausführungsformen sind in den abhängigen Ansprüchen definiert.

Mit den erfindungsgemäßen Maßnahmen geht der Vorteil einher, dass das Regaletikett das Vorliegen einer Fehl-Positionierung autonom feststellen kann und darauf abgestimmt seinen Bildinhalt anpassen kann. Da das Regaletikett seine Fehl-Positionierung autonom, also selbständig erkennt, ist insbesondere keine Server-Intervention oder Access-Point-Intervention oder Kommunikation mit besagtem Server oder Access-Point nötig, um die Fehlpositionierung zu erkennen und die Änderung des Bildinhalts zu bewirken. Besonders bevorzugt kann die Erkennung der Fehlpositionierung und die Änderung des Bildinhalts auch von anderen, gerade vorliegenden Zuständen, insbesondere der Elektronik, des Regaletiketts unabhängig sein, also beispielsweise mit hoher, insbesondere mit höchster Priorität erfolgen.

Das Regaletikett, wenn konfiguriert als Regaletikettenanzeige, kann eine energiesparende Anzeige-Einheit, wie z.B. eine LCD Anzeige aufweisen. Insbesondere basiert die zur Anwendung kommende Technologie jedoch auf Electronic-Ink- bzw. Electronic-Paper-Technologie. Eine solche Anzeige-Einheit weist also einen reflektiven Bildschirm, im Fachjargon auch Electronic-Paper-Display, abgekürzt EPD, genannt, auf und ist mit Hilfe von "elektronischem Papier", kurz "E-Papier" auch englisch "e-paper" oder "e-ink" genannt, realisiert. Diese Begriffe stehen im Wesentlichen für das Prinzip einer elektrophoretischen Anzeige, bei der z.B. positiv geladene, weiße Partikel und negativ geladene, schwarze Partikel in einem transparenten zähflüssigen Polymer enthalten sind. Durch kurzzeitiges Anlegen einer Spannung an Elektroden, zwischen denen das Medium aus Partikeln und Polymer angeordnet ist, werden in Betrachtungsrichtung entweder die schwarzen vor den weißen Partikeln platziert oder umgekehrt. Diese Anordnung bleibt dann ohne weitere Energiezufuhr für relativ lange Zeit (z.B. einige Wochen) aufrecht. Segmentiert man die Anzeige entsprechend, so lassen sich z.B. Buchstaben, Zahlen oder Bilder mit relativ hoher Auflösung realisieren, um besagte Informationen anzuzeigen. Ein solcher reflektiver Bildschirm kann jedoch auch mit Hilfe anderer Technologien, die z.B. unter dem Begriff "electrowetting" oder "MEMS" bekannt sind, realisiert sein. Der Bildschirm kann z.B. wie erwähnt zur Schwarz-Weiß-Wiedergabe, zur Graustufen-Wiedergabe, zur Schwarz-Weiß-Rot- oder auch Schwarz-Weiß-Gelb-Wiedergabe ausgebildet sein. Auch sollen zukünftige Entwicklungen mitumfasst sein, die eine Voll-Farb- oder auch Multi-Color-Wiedergabe ermöglichen. Bei einem solchen Bildschirm handelt es sich ganz allgemein um einen reflektiven, also passiven, nicht selbst leuchtenden Bildschirm bei dem die - relativ statische - Informationswiedergabe darauf basiert, dass von einer externen (künstlichen oder natürlichen) Lichtquelle erzeugtes Licht auf den Bildschirm einstrahlt und von dort zum Betrachter reflektiert wird.

Unter der Soll-Positionierung kann beispielsweise eine Befestigung an einer Regalschiene verstanden sein, wobei die Rückseite des Regaletiketts üblicherweise plan an der Regalschiene anliegt. Solcherart befestigte Regaletiketten können eine horizontale oder eine leicht nach oben hin ausgerichtete Orientierung eines Bildschirms ihrer Anzeigeeinheit aufweisen. Üblicherweise sind die Gehäuse der Regaletiketten kubisch gestaltet, sodass sich die Orientierung des Bildschirms meist automatisch durch die Orientierung der Regalschiene ergibt. Seltener sind die Bildschirme leicht nach unten hin orientiert, was nur dann sinnvoll erscheint, wenn sie oberhalb des Kopfs einer Person bzw. eines Betrachters positioniert sind. Regaletiketten können jedoch auch zum Aufstellen auf Tischen oder Regalböden ausgebildet sein, woraus sich ihre Soll-Positionierung im Wesentlichen durch ihre für die Betrachtung ihres Bildinhalts optimierte, meist leichte Neigung des Bildschirms nach oben hin ergibt. Somit hat jedes Regaletikett seine persönliche, individuelle Soll-Positionierung, wobei natürlich auch eine Gruppe von Regaletiketten eine im Wesentlichen ähnliche oder auch gleiche Soll-Positionierung aufweisen kann, z.B. wenn diese an identisch ausgebildeten Regalschienen befestigt sind.

Unter der Fehl-Positionierung ist nun eine von der individuellen Soll-Positionierung abweichende Positionierung zu verstehen, die sich im Wesentlichen durch eine Erfassung eines physikalischen Parameters, der für die Soll-Positionierung oder auch für die Fehl-Positionierung typisch ist, erkennen lässt, worauf nachfolgend im Detail eingegangen ist.

Weitere, besonders vorteilhafte Ausgestaltungen und Weiterbildungen der Erfindung ergeben sich aus den abhängigen Ansprüchen sowie der nachfolgenden Beschreibung. Dabei können Merkmale der einen Anspruchs-Kategorie entsprechend den Merkmalen der anderen Anspruchs-Kategorie weiterentwickelt werden, sodass die im Zusammenhang mit der einen Anspruchs-Kategorie angeführten Wirkungen und Vorteile auch für die andere Anspruchs-Kategorien vorliegen.

Gemäß einer ersten Ausbildungsform kann die Detektor-Einheit eine Fotodiode aufweisen, die mit einer Detektor-Elektronik verbunden ist. Mithilfe der Fotodiode lässt sich auf einfache Weise feststellen, ob das Regaletikett z.B. von einer Regalschiene oder von einem Regalboden entfernt wurde. Die Fotodiode ist dabei bevorzugt so in das Gehäuse des Regaletiketts eingebaut, dass ihre lichtempfindliche Zone ein Umgebungslicht des Regaletiketts empfangen kann, wenn das Regaletikett von der Regalschiene (also von der Soll-Positionierung) entfernt wurde oder vom Regalboden bzw. Tisch (also von der Soll-Positionierung) abgehoben wurde. Bei einem Regaletikett, das für die Regalschienen-Montage vorgesehen ist, ist die Leuchtdiode folglich so eingebaut, dass ihre lichtempfindliche Zone Licht empfangen kann, das auf die Rückwand des Regaletiketten-Gehäuses fällt. Dies ist immer dann der Fall, wenn das Regaletikett nicht an der Regalschiene installiert ist, wo kein Lichteinfall auf die Rückwand vorliegen kann, weil diese plan an der Regalschiene anliegt. Bei einem Regaletikett, das für die Aufstellung auf einem Regalboden bzw. Tisch vorgesehen ist, ist die Leuchtdiode folglich so eingebaut, dass ihre lichtempfindliche Zone Licht empfangen kann, das auf die Bodenwand des Regaletiketten-Gehäuses fällt. Dies ist immer dann der Fall, wenn das Regaletikett vom dem Regalboden bzw. Tisch hochgehoben wurde, so das Licht auf die Bodenwand einfällt, auf der das Regeletikett andernfalls stehen würde. Die Detektor-Elektronik ist im vorliegenden Fall so realisiert, dass sie Unterschiede der in Leitfähigkeit der Fotodiode erkennt und in Abhängigkeit von einem voreingestellten Schwellwert eine Detektion feststellt. Hierbei kann auch vorgesehen sein, dass die Fotodiode nicht vollständig abgeschattet ist, wenn von der Soll-Positionierung ausgegangen ist.

Gemäß einer zweiten Ausbildungsform kann die Detektor-Einheit einen Abstandssensor (englisch "proximity sensor") aufweisen, der mit der Detektor-Elektronik verbunden ist. Ähnlich wie in Bezug auf die Fotodiode erörtert, kann auch der Abstandssensor zum Einsatz kommen bzw. in das Regaletiketten-Gehäuse integriert sein. Das physikalische Prinzip, nach dem der Abstandssensor arbeitet, besteht im Wesentlichen darin, dass ein elektromagnetisches Feld oder Signal ausgesandt wird und die Detektor-Elektronik derart ausgebildet ist, dass sie eine Veränderung in dem von einem anderen Gegenstand reflektierten Signal detektiert, um eine von der Soll-Positionierung abweichende Fehl-Positionierung zu detektieren. Im Unterschied zum Einsatz einer Fotodiode eignet sich die Verwendung des Abstandssensors insbesondere dann, wenn z.B. von vorne herein in der Soll-Positionierung zwischen dem jeweiligen Regaletikett und einem Bezugsgegenstand, zu dem das elektromagnetische Feld oder Signal ausgesandt wird, ein Abstand besteht.

Gemäß einer dritten Ausbildungsform kann die Detektor-Einheit einen Neigungssensor (englisch "tilt or inclination sensor") aufweisen, der mit der Detektor-Elektronik verbunden ist. Neigungssensoren werden auch als "Inklinometer" oder "Clinometer" bezeichnet und messen im Wesentlichen einen Winkel eines Objekts in Bezug auf die Richtung der Schwerkraft. In der vorliegenden Anwendung des Neigungssensors muss dieser Winkel jedoch nicht absolut bestimmt werden. Vielmehr reicht es völlig aus, wenn die Detektor-Elektronik dazu ausgebildet ist, eine Veränderung dieses Winkels festzustellen, was typischerweise der Fall ist, wenn ein Regaletikett von einer Regalschiene (Soll-Positionierung) entfernt wird (z.B. von ihr herunterfällt) und dann am Boden z.B. mit dem Bildschirm nach unten oder nach oben orientiert liegen bleibt (Fehl-Positionierung) oder auf einem Regalboden bzw. Tisch von der aufrecht stehenden Orientierung (Soll-Positionierung) in eine liegende Positionierung (Fehl-Positionierung) gebracht wird.

Gemäß einer vierten Ausbildungsform kann die Detektor-Einheit einen Laufzeitsensor (englisch "time-of-flight sensor") aufweisen, der mit der Detektor-Elektronik verbunden ist. Ein solcher Laufzeitsensor basiert auf dem Prinzip, dass die Distanz zu einem anderen Objekt basierend auf der Zeitdifferenz zwischen der Emission eines Signals und dem Empfang des von einem anderen Objekt reflektierten Signals gemessen wird. Laufzeitsensoren sind typischerweise recht aufwendig, ihr Einsatz öffnet jedoch im vorliegenden Kontext weitere Möglichkeiten. So kann mithilfe des Laufzeitsensors ganz einfach festgestellt werden, ob eine Abweichung von der Soll-Positionierung vorliegt oder nicht. Ist ein solcher Laufzeitsensor beispielsweise an der Rückseite eines für die Regalschienen-Montage ausgebildeten Regaletiketts vorgesehen, würde er bei der Soll-Positionierung des Regaletiketts an der Regalschiene im Wesentlichen keinen Abstand zwischen dem Regaletikett und der Regalschiene feststellen. Sobald das Regaletikett jedoch von der Regalschiene entfernt wurde und mit dem Bildschirm nach unten zu liegen kommt, kann mithilfe des Laufzeitsensors der Abstand zum nächstgelegenen Objekt bestimmt werden, wobei dies üblicherweise die Unterseite eines oberhalb des Regaletiketts verlaufenden Regalbodens ist, wenn das Regaletikett noch im Regal auf einem Regalboden liegt, oder der Plafond bzw. die Raum-Decke eines Geschäftslokals ist, wenn das Regaletikett am Fußboden des Geschäftslokals oder auf dem obersten Regalboden eines Regals mit freier Sicht auf den Plafond zu liegen kommt, oder die Unterseite eines Geräts oder Regals ist, wenn das Regaletikett unter dem Gerät oder Regal zu liegen kommt. Ausgehend von der Abstandmessung, die nicht einmal absolut sein muss, sondern sogar nur relativ zu sein braucht, weil die erörterten Szenarien zu ausreichend unterscheidbaren Sensorwerten führen, kann darauf basierend ein Rückschluss auf den zu erwartenden Ort des Regaletiketts getätigt werden, was das Wiederauffinden des Regaletiketts erleichtern kann.

Ganz allgemein sei hier festgehalten, dass in einer Kommunikation über das Kommunikation-Modul natürlich auch der Zustand der Detektor-Einheit wie auch die Sensorwerte abfragbar sind.

Bevorzugt weist das Regaletikett einen Langzeit-Energiespeicher zur elektrischen Versorgung der Anzeige-Einheit während ihrer Bildinhaltsveränderung-Aktivität auf. Dieser Langzeit-Energiespeicher kann je nach Implementierung eine Batterie, eine wieder aufladbare Batterie, ein Akkumulator oder auch ein sogenannter "Superkondensator", kurz Supercap, sein. Mit dem Langzeit-Energiespeicher ist sichergestellt, dass die Anzeige-Einheit jederzeit eine Bildinhaltsveränderung-Aktivität ausführen kann. Der Vorteil des erwähnten Superkondensators liegt jedoch in folgendem Sachverhalt. Ein Superkondensator, auch Ultrakondensator genannt, ist ein Hochleistungskondensator mit einem Kapazitätswert, der viel höher als bei anderen Kondensatoren ist, jedoch niedrigere Spannungsgrenzen aufweist und die Lücke zwischen Elektrolytkondensatoren und wiederaufladbaren Batterien überbrückt. Er speichert typischerweise 10 bis 100 Mal mehr Energie pro Volumen- oder Masseneinheit als Elektrolytkondensatoren, kann Ladungen viel schneller als Batterien aufnehmen und abgeben und toleriert viel mehr Lade- und Entladezyklen als wiederaufladbare Batterien.

Der Langzeit-Energiespeicher kann z.B. als Supercap realisiert zusätzlich zu einer für den Normalbetrieb vorgesehenen Batterie in dem Regaletikett vorgesehen sein. Auch kann das Regaletikett einen Energieübertragung-Empfänger aufweisen, der mit Hilfe von gerichteten FunkSignalen ausgesandt von einem Energieübertragung-Sender Energie auf kontaktlose Weise zum Aufladen des Langzeit-Energiespeichers empfangen kann. Diese Energie-Übertragung-Technik ist unter dem Begriff "Power over WiFi" bekannt.

Das Kommunikation-Modul kann beispielsweise zur Kommunikation gemäß WLAN-, ZigBee- oder auch Bluetooth-Kommunikationsprotokoll usw. mit einem Access-Point ausgebildet sein, wobei der Access-Point eine Schnittstelle hin zu einem Server bildet, der eine Warenwirtschafts- bzw. Regaletikettensteuerungs-Software abarbeitet. Diese Software kann jedoch auch als Cloud-Lösung über ein externes Rechenzentrum bereitgestellt werden. In einem Geschäftslokal kann eine Vielzahl solcher Access-Points verbaut sein, wobei jeder Access-Point eine Gruppe von Regaletiketten, die ihm funktechnisch zugeordnet, also bei ihm angemeldet sind, versorgt.

Gemäß einem ersten Ausführungsbespiel des Regaletiketts ist das Kommunikation-Modul zur funkbasierten Kommunikation gemäß einem Zeitschlitz-Kommunikationsverfahren ausgebildet, wobei bei dem Zeitschlitz-Kommunikationsverfahren in sich wiederholender Folge eine Anzahl von Zeitschlitzen pro Zeitschlitzzyklus zur Kommunikation bereitstehen, bevorzugt jeder Zeitschlitz durch ein eindeutiges Zeitschlitzsymbol gekennzeichnet ist, und das Kommunikation-Modul einen energiesparenden Schlaf-Zustand aufweist, in dem keine Kommunikationsbereitschaft zur Kommunikation besteht, und das Kommunikation-Modul einen Aktiv-Zustand aufweist, in dem eine Kommunikationsbereitschaft besteht, und wobei das Kommunikation-Modul dazu ausgebildet ist, zeitgerecht zum Auftreten jenes Zeitschlitzes, dem das Regaletikett zugeordnet ist, von dem Schlaf-Zustand in den Aktiv-Zustand zu wechseln, und wobei der Langzeit-Energiespeicher während des Aktiv- und des Schlaf-Zustands zur elektrischen Versorgung der Detektor-Einheit zum Einsatz kommt. Mit dieser Ausbildung geht der Vorteil einher, dass ein Großteil der Elektronik des Regaletiketts möglichst lange in dem energiesparenden Schlaf-Zustand verharren kann und zugleich die Detektor-Einheit aktiv sein kann, um die Veränderung der Positionierung des Regaletiketts möglichst rasch nach eintreten der Veränderung der Positionierung detektieren zu können. So kann im vorliegenden Fall die Elektronik der Anzeige-Einheit permanent mit Energie versorgt werden, und zwar auch dann, wenn keine Detektion der Fehl-Positionierung vorliegt. Andererseits kann die Elektronik der Anzeige-Einheit erst dann mit Energie versorgt werden, wenn die Detektion der Fehl-Positionierung erfolgt. Dies kann z.B. gesteuert durch die Detektor-Einheit erfolgen. Nach erfolgter Bildinhaltsveränderung-Aktivität kann die elektrische Versorgung der Anzeige-Einheit wieder eingestellt werden.

Bevorzugt kommt bei der Kommunikation - wie erwähnt - ein proprietäres Zeitschlitz-Kommunikationsverfahren, das dem Prinzip nach aus der WO2015/124197, Seiten 2 bis 4, sowie den Figuren 1-8C mit zugehöriger Beschreibung bekannt ist, zum Einsatz, wobei nachfolgend auf die aller wesentlichsten Aspekte eingegangen ist.

Gemäß diesem proprietären Zeitschlitz-Kommunikationsverfahren kommuniziert der Access-Point mit einer Anzahl von Regaletiketten derart, dass in sich stetig (kontinuierlich) wiederholender Folge eine Anzahl von Zeitschlitzen pro Zeitschlitzzyklus zur Kommunikation bereitstehen und jeder Zeitschlitz durch ein eindeutiges Zeitschlitzsymbol auf eindeutige Weise gekennzeichnet ist und somit alleine durch das Zeitschlitzsymbol von anderen Zeitschlitzen unterscheidbar ist. Gemäß dem Verfahren sendet der Access-Point für den momentan vorliegenden Zeitschlitz ein Synchronisations-Datensignal aufweisend das Zeitschlitzsymbol am Beginn des jeweiligen Zeitschlitzes aus. Die Regaletiketten kennen diese Systematik des Zeitschlitz-Kommunikationsverfahrens und sind dazu ausgebildet, zu einem Aufwachzeitpunkt von einem (extrem energiesparenden) Schlaf-Zustand, in dem z.B. keine Funksignal-Empfangsbereitschaft besteht, in einen Aktiv-Zustand, in dem z.B. eine Funksignal-Empfangsbereitschaft besteht, zu wechseln und zum Empfangen des Synchronisations-Datensignals im Aktiv-Zustand, und, wenn das empfangene Zeitschlitzsymbol einen für das jeweilige Regaletikett bestimmten Zeitschlitz anzeigt, zum Definieren eines zu dem nächsten Auftreten des für dieses Regaletikett bestimmten Zeitschlitz korrespondierenden neuen Aufwachzeitpunkts in einem auf den momentan vorliegenden Zeitschlitzzyklus folgenden Zeitschlitzzyklus.

Damit geht der Vorteil einher, dass ein Synchronismus zwischen dem Access-Point und den Regaletiketten auf möglichst einfache und trotzdem äußerst robuste Weise erkannt, beibehalten und während des Betriebs des Systems gewährleistet ist. Dies verbessert auch die Energieeffizienz der Gesamtheit der Regaletiketten, die logisch einem einzigen Access-Point zugeordnet sind, weil bereits unmittelbar zu Beginn des Zeitschlitzes die Prüfung auf Synchronismus stattfindet. Das weitere Verhalten des Regaletiketts hängt dann davon ob, ob es adressiert ist.

Grundsätzlich könnte das Synchronisations-Datensignal ausschließlich durch das Zeitschlitzsymbol gebildet sein und weitere zur Kommunikation mit dem Access-Point (bzw. Server) benötigte Kommunikationsparameter, wie z.B. Adressdaten zur Adressierung oder Befehlsdaten zur Übermittlung von Befehlen aus dem Synchronisations-Datensignal ausgegliedert sein. Da das Zeitschlitzsymbol bevorzugt jedoch ein extrem kompakter Indikator zur Synchronisierung der Kommunikation im System ist, also z.B. durch die laufende Nummer des Zeitschlitzes gebildet sein kann, bietet es sich an, zusätzlich zu dem Zeitschlitzsymbol weitere Informationen in das Synchronisierungs-Datensignals einzubetten.

Daher ist es von Vorteil, wenn der Access-Point zum Einbetten von Adressdaten in das Synchronisations-Datensignal ausgebildet ist, mit deren Hilfe eine Anzahl von Regaletiketten pro Zeitschlitz individuell adressierbar ist.

Analog zu dem zuvor gesagten über das Einbetten von Adressdaten liegt ein weiterer erheblicher Beitrag zur Systemeffizienz vor, wenn der Access-Point zum Einbetten von Befehlsdaten in das Synchronisations-Datensignal ausgebildet ist, die beim adressierten Regaletikett zu einer Befehlsausführung führen. Es kann aber beispielsweise auch ohne eine individuelle Adressierung ein Befehl an alle einem bestimmten Zeitschlitz zugewiesenen Regaletiketten übermittelt werden, der dann von einer relativ großen Gruppe von Regaletiketten, beispielsweise allen, ausgeführt werden kann.

Grundsätzlich könnte das Regaletikett auch bereits durch ein Erkennen seiner individuellen Adressierung eine standardisierte (vordefinierte) Aufgabe ausführen, ohne dass ein expliziter Befehl empfangen werden müsste. Als besonders vorteilhaft hat es sich jedoch erweisen, wenn Adressdaten zur Adressierung eines individuellen Regaletiketts und Befehlsdaten zur Übermittlung eines Befehls an dieses individuelle Regaletikett übermittelt werden und das Regaletikett dazu ausgebildet ist, die Befehlsdaten auszuwerten und den Befehl auszuführen, wenn es mit Hilfe der Adressdaten individuell adressiert ist. Somit lässt sich in einer mitunter relativ großen Gruppe von Regaletiketten ein Befehl für ein einziges Regaletikett übermitteln.

Der Access-Point kann jedoch auch so ausgebildet sein, dass er Daten, die vom Server bzw. vom Regaletikette stammen nur tunnelt, also nur die Umsetzung zwischen kabelgebundener Kommunikation und Funk-Kommunikation realisiert, wobei das Zeitschlitz-Kommunikationsverfahren dann direkt vom Server bereitgestellt bzw. abgewickelt wird.

Wie eingangs erörtert, benötigt das EPD über eine längere Zeitspanne hinweg keine Energieaufnahme, um einen Bildinhalt darzustellen. Daher wird in gängigen Regaletiketten das EPD oft nur dann innerhalb eines dem Regaletikett zugeordneten Zeitschlitzes mit elektrischer Energie versorgt, wenn aufgrund der Kommunikation über das Kommunikation-Modul im Aktiv-Zustand eine Veränderung des Bildinhalts nötig ist. In Abkehr davon ist nun vorgesehen, dass der Langzeit-Energiespeicher auch während des - üblicherweise im Verhältnis zum Aktiv-Zustand relativ lange andauernden - Schlaf-Zustands zur elektrischen Versorgung der Anzeige-Einheit während ihrer Bildinhaltsveränderung-Aktivität zum Einsatz kommt. Dies erlaubt eine rasche und vor allem vom Zyklus des Wechsels zwischen Aktiv-Zustand und Schlaf-Zustand losgelöste Visualisierung der detektierten Fehl-Positionierung.

Gemäß einem zweiten Ausführungsbeispiel des Regaletiketts ist das Kommunikation-Modul zur Kommunikation gemäß einer Near-Field-Communcation-, abgekürzt NFC-, Spezifikation ausgebildet und bei einem Empfang eines NFC-Signals zum Erzeugen einer Versorgungsspannung für das Regaletikett ausgebildet, wobei der Langzeit-Energiespeicher während der Abwesenheit des NFC-Signals, also in einer Zeitspanne ohne besagtes NFC-Signal, zur elektrischen Versorgung der Detektor-Einheit zum Einsatz kommt.

Im vorliegenden Fall weist das ESL-System an einer Regalschiene eines Regals ein Near-Field-Communication-, abgekürzt NFC-, Sub-System auf, wobei das NFC-Sub-System derart charakterisiert ist, dass die Regalschiene einen NFC-Reader aufweist, der zur funkbasierten Kommunikation mit dem Access-Point ausgebildet ist. In Abkehr von den Erörterungen zum ersten Ausführungsbeispiel ist nun der NFC-Reader zur Funk-Kommunikation gemäß dem erörterten Zeitschlitz-kommunikationsverfahren mit dem Access-Point ausgebildet.

Weiterhin weist das NFC-Sub-System eine an den NFC-Reader angeschlossene Leiterschleife, die entlang der Regalschiene ausgebildet ist und zur NFC-Kommunikation mit einem oder mehreren NFC-fähigen Regaletiketten dient, auf, wobei korrespondierend zu der Leiterschleife zumindest ein NFC-fähiges Regaletikett an der Regalschiene angebracht ist. In diesem NFC-Sub-System dient der NFC-Reader also zur NFC-Kommunikation mit dem NFC-fähigen Regaletikett, wobei die durch den Server adressierten Regaletiketten über den NFC-Reader angesprochen bzw. adressiert werden. Der hierbei zum Einsatz kommende NFC-Reader weist also neben seinem standardisierten NFC-Kommunikation-Modul auch ein weiteres Access-Kommunikation-Modul auf, das zur Kommunikation gemäß dem erwähnten Zeitschlitz-Kommunikationsverfahren ausgebildet ist. Das NFC-Sub-System übernimmt im elektronischen Regaletiketten-System also die Rolle einer Vermittlungseinrichtung, um die vom Server adressierten Regaletiketten physikalisch anzusprechen, also mit ihnen kommunizieren zu können. Im NFC-Sub-System erfolgt die Kommunikation demnach NFC-Standard-konform, wobei die Adressierung der Regaletiketten durch den Server erfolgt und das NFC-Sub-System diese Adressierung umsetzt bzw. anwendet. Zwecks physikalischer Adressierung der Regaletiketten kann auf zweierlei Arten vorgegangen werden, und zwar wie folgt.

Gemäß einer ersten Ausbildungsform speichert der NFC-Reader eine Datenstruktur, die eine Zuordnung eines an seiner Regalschiene befestigten Regaletiketts zu einem der Zeitschlitze repräsentiert, wobei der NFC-Reader dazu ausgebildet ist, jenen Zeitschlitz, dem laut Datenstruktur ein Regaletikett zugeordnet ist, daraufhin zu prüfen, ob das an seiner Regalschiene befestigte Regaletikett durch den Server adressiert ist. Die Datenstruktur setzt sich im vorliegenden Fall aus der Regaletiketten-Kennung, die auch dem Server bekannt ist und von ihm zur Adressierung verwendet wird, und dem zughörigen Zeitschlitzsymbol zusammen. Im vorliegenden Fall muss der Server über die Existenz der NFC-Reader nicht informiert sein und lediglich die Beziehung zwischen Access-Point und Regaletikett kennen.

Gemäß einer zweiten Ausbildungsform ist der NFC-Reader selbst einem der Zeitschlitze zugeordnet und er speichert eine Datenstruktur, welche die an der Regalschiene des NFC-Readers befestigten Regaletiketten repräsentiert, und der NFC-Reader ist dazu ausgebildet, jenen Zeitschlitz, dem er selbst zugeordnet ist, daraufhin zu prüfen, ob das an seiner Regalschiene befestigte Regaletikett durch den Server adressiert ist. Die Datenstruktur setzt sich im vorliegenden Fall aus der Regaletiketten-Kennung jener Regaletiketten zusammen, die an der Regalschiene des betreffende NFC-Readers befestigt sind. Im vorliegenden Fall muss auch der Server Kenntnis über die Existenz der NFC-Reader haben und die Beziehung zwischen Access-Point und NFC-Reader wie auch die Beziehung zwischen NFC-Reader und deren Regaletiketten kennen, um das jeweilige Regaletikett indirekt über den NFC-Reader adressieren zu können.

NFC steht für Near Field Communication und die zutreffenden Standards sind z.B. ISO/IEC 13157, -16353, -22536, -28361 usw. Bei einer NFC-Kommunikation generiert der NFC-Reader ein NFC-Signal und sendet es mit Hilfe der Leiterschleife (als Antenne) aus. Auf der Seite des NFC-fähigen Regaletiketts wird mit Hilfe einer NFC-Schnittstelle des Regaletiketts dieses NFC-Signal zunächst empfangen und zur Erzeugung einer internen Versorgungsspannung verwendet, um die Elektronik des Regaletiketts elektrisch zu versorgen und zu starten, um dann mit dem NFC-Reader NFC-konform über sie NFC-Schnittstelle des Regaletiketts zu kommunizieren.

Bei der NFC-konformen Kommunikation kommen NFC-Kennungen der involvierten Kommunikationspartner (NFC-Reader und NFC-fähiges Regaletikett) zum Einsatz, die sich typischerweise von jenen der Regaletiketten-Kennung unterscheiden.

Das NFC-fähige Regaletikett ist weiterhin derart ausgebildet, dass es die mit Hilfe des NFC-Signals vom NFC-Reader übermittle elektrische Energie in einem Supercap für seinen Betrieb während der Abwesenheit des NFC-Signals speichert. Dies ermöglicht eine autonome, vom Zeitraum des Vorliegens des NFC-Signals unabhängige Bereitstellung diverser Funktionen, insbesondere der Detektion der Fehl-Positionierung und der Bildinhaltsveränderung-Aktivität.

Die Implementierung der NFC-Schnittstelle auf der Seite des NFC-Readers wie auch des Regaletiketts gehört zur Routinetätigkeit des Fachmanns, der die einschlägigen "Applikation Notes" der Hersteller von NFC-ICs (IC steht hier für "Integrated Circuit") kennt.

Auch der NFC-Reader kann eine Batterie- und/oder Akkumulatorbasierte Energieversorgung aufweisen. Bevorzugt weist der NFC-Reader jedoch einen Supercap und einen Energieübertragung-Empfänger auf, der wie vorangehend erörtert eine "Power-over-WiFi" Energieübertragung ermöglicht, so dass der NFC-Reader jeder Regalschiene auf kontaktlose Weise mit Energie versorgt wird. Der NFC-Reader ist weiterhin dazu ausgebildet, das Funksignal, mit dem die Energie übertragen wird, zur elektrischen Aufladung des Supercap zu nützen.

Im vorliegenden Fall ist es besonders vorteilhaft, wenn der Langzeit-Energiespeicher während der Abwesenheit des NFC-Signals zur elektrischen Versorgung der Anzeige-Einheit während ihrer Bildinhaltsveränderung-Aktivität zum Einsatz kommt. Auch hier kann bei erfolgter Detektion der Fehl-Positionierung durch die unmittelbare Verfügbarkeit der Energieversorgung die Anzeige-Einheit de facto verzögerungsfrei und vor allem unabhängig von der NFC-Signal-basierten Versorgung den Umstand der Fehl-Positionierung bildlich umsetzen.

Besonders bevorzugt ist das Regaletikett zum Verändern des Bildinhalts derart ausgebildet, dass die Anzeige-Einheit zum direkten Empfangen des Aktionssignals, insbesondere als Interrupt-Signal, ausgebildet ist und als Folge des Empfangs des Aktionssignal zum Löschen des zuletzt angezeigten Bildinhalts ausgebildet ist. Diese Maßnahme stellt die wirkungsvollste Vorgehensweise dar, um Missverständnisse oder Verwirrung bei erkannter Fehl-Positionierung sofort zu vermeiden. Ein gelöschter Bildschirm, also ein Bildschirm, der keinen Inhalt anzeigt, kann bei einem Kunden keine falschen Eindrücke erwecken und wird üblicherweise ignoriert. Das Personal des Supermarkts muss lediglich instruiert werden, Regaletiketten, die sie an ungewöhnlichen Positionen oder mit ungewöhnlicher Ausrichtung vorfinden, und die keinen Bildinhalt anzeigen, einzusammeln.

Weiterhin kann die Ausbildung zum Verändern des Bildinhalts die Maßnahme aufweisen, dass die Anzeige-Einheit veranlasst ist, an Stelle des zuletzt dargestellten Bildinhalts eine Nachricht als Bildinhalt darzustellen, welche den internen Zustand der Detektion wiedergibt, insbesondere in Kombination mit einer Handlungsaufforderung. Diese Maßnahme beruht darauf, dass in einem internen Speicher der Anzeige-Einheit z.B. als Bildinhalt ein den Bildschirm füllendes "X" zusammen mit dem Text "Etikett abgeben" gespeichert ist. Das "X" repräsentiert hier den internen Zustand der Detektion einer Fehl-Positionierung und der Text "Etikett abgeben" bildet in diesem Zusammenhang die Handlungsaufforderung, die sich benutzergruppenneutral an das Personal wie auch die Kunden richtet.

Besonders bevorzugt ist das Regaletikett, insbesondere dessen Detektor-Einheit, dazu ausgebildet, den Zustand der Detektion der Fehl-Positionierung digital zu speichern. Dies verhindert, dass mehrfache Veränderungen der Positionierung zu mehrfachen Bildinhaltveränderung-Aktivitäten führen, was letztendlich auf einen unnötigen Energieverbrauch hinauslaufen würde.

In diesem Zusammenhang hat es sich weiterhin als vorteilhaft erwiesen, dass das Regaletikett dazu ausgebildet ist, erst dann wieder eine Bildinhaltveränderung-Aktivität nach der durch das Detektieren der Fehl-Positionierung erfolgten Veränderung des Bildinhalts durchzuführen, nachdem der gespeicherte Zustand der Detektion der Fehl-Positionierung mit Hilfe einer Kommunikation über das Kommunikation-Modul gelöscht wurde. Dies kann so realisiert sein, dass im Speicher der Anzeigeeinheit ein Statusbit gespeichert wird, das die Fehl-Positionierung repräsentiert und zunächst vom Server aus das Statusbit verändert (z.B. gelöscht) werden muss. Damit wird sichergestellt, dass ein Regaletikett so lange von seiner regulären Benutzung ausgeschlossen ist, bis der Server die Fehl-Positionierung registrieren konnte und das Regaletikett wieder regulär in das ESL-System eingebunden wurde. Dies kann bedeutet, dass der Server die Detektion der Fehl-Positionierung durch Kommunikation über das Kommunikation-Modul erfassen konnte (also das Statusbit abfragen konnte), den gespeicherten Zustand löschen konnte (also den Wert des Statusbits verändern konnte) und dann eine neuerliche Zuordnung des Regaletiketts zu einem Produkt (oder auch eine Reaktivierung dieser vorherigen Zuordnung) abwickeln konnte.

Die Elektronik der verschiedenen Vorrichtungen des Systems wie auch deren Interface usw. kann mit Hilfe unterschiedlichster passiver wie auch aktiver elektronischer Bauteile auf diskrete wie auch integrierte Weise realisiert sein. Bevorzugt kommt dabei auch ein Mikroprozessor mit entsprechenden Peripheriebausteinen oder ein Mikrokontroller zum Einsatz, worauf eine Software zur Bereitstellung der verschiedenen Funktionalitäten abgearbeitet wird. Auch können sogenannte ASICs (Application-Specific Integrated Circuits) zur Anwendung kommen. Im Detail können die verschiedenen Bau- bzw. Funktionsgruppen, insbesondere die Verbraucher im Regaletikett neben passiven Bauteilen die erwähnten, individuelle integrierte Schaltkreise (Mikrokontroller, Mikroprozessor, ASIC, funktionsspezifische ICs usw.) aufweisen.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: ein erfindungsgemäßes elektronisches Regaletiketten-System;
- Fig. 2: ein Blockschaltbild einer Regaletikettenanzeige;
- Fig. 3: ein Blockschaltbild einer "intelligenten" Regalschiene;
- Fig. 4: eine perspektivische Ansicht der Regalschiene mit einem NFC-fähigen Regaletikett und einem NFC-Reader;
- Fig. 5: einen Querschnitt der Ansicht gemäß der Figur 4 entlang der Schnittfläche A-A;
- Fig. 6: eine Explosionsdarstellung der Regalschien;
- Fig. 7: eine Ansicht der Gehäuse-Rückseite des Regaletiketts mit Sichtfenster und korrespondierend dazu angeordneter Fotodiode.

### Beschreibung der Ausführungsbeispiele

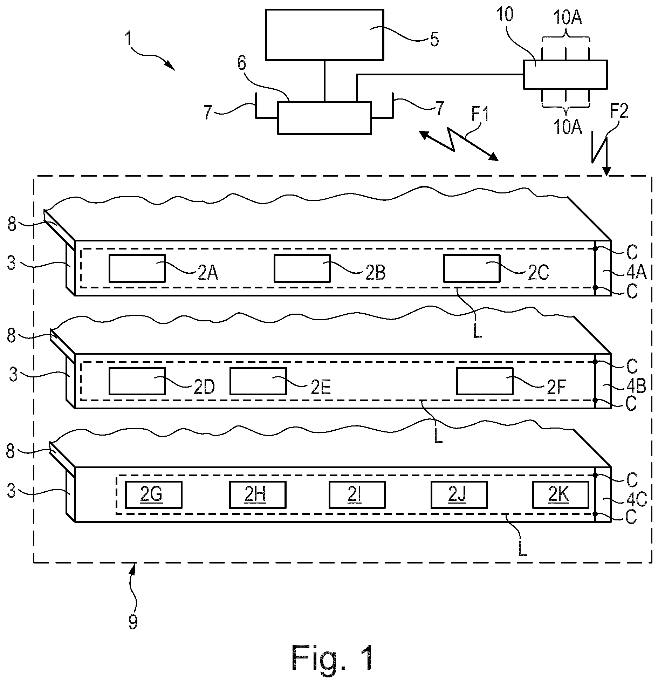

In der Figur 1 ist ein Regaletiketten-System 1 dargestellt, das eine Anzahl von identisch ausgebildeten elektronischen NFC-fähige Regaletiketten 2A-2K realisiert als Regaletikettenanzeigen umfasst, die an drei "intelligenten" Regalschienen 3 befestigt sind. Jede der Regalschienen 3 weist ein NFC-Sub-System auf. Bestandteil jedes NFC-Sub-Systems ist ein NFC-Reader 4A-4C. Der NFC-Reader 4A-4C ist seitlich in die Regalschiene 3 eingesetzt. Weiterhin weist jede Regalschiene 3 als Bestandteil des NFC-Sub-Systems eine Leiterschleife L auf, die sich entlang der gesamten Länge der Regalschiene 3 erstreckt und deren Leiterschleifen-Anschlüsse C mit dem NFC-Reader 4A-4C elektrisch leitend verbunden sind. Die Leiterschleife L bildet die Antenne des jeweiligen NFC-Readers 4A-4C und ist somit ein in der Regalschiene 3 integrierter Bestandteil des jeweiligen NFC-Readers 4A-4C. Sobald an der jeweiligen Regalschiene 3 korrespondierend zu ihrer Leiterschleife L Regaletiketten 2A-2K installiert sind und vom dortigen NFC-Reader 4A-4C erfasst wurden, bilden auch diese Regaletiketten 2A-2K einen Bestandteil des jeweiligen NFC-Sub-Systems der Regalschiene 3.

Der jeweilige NFC-Reader 4A-4C nimmt die Rolle eines Regalschienen-Controllers zur Steuerung der an seiner Regalschiene 3 installierten Regaletiketten 2A-2K ein. Dabei kommuniziert der jeweilige NFC-Reader 4A-4C kontaktlos gemäß einem NFC-Kommunikationsprotokoll mit den an seiner Regalschiene 3 installierten NFC-fähigen Regaletiketten 2A-2K. Hierfür sendet er mit Hilfe der Leiterschleife L ein NFC-Signal aus, das beim jeweiligen Regaletikett 2A-2K zur Energieversorgung wie auch zur Datenübertragung verwendet wird.

Ebenfalls dargestellt ist eine Datenverarbeitungseinrichtung, die im vorliegenden Fall mit Hilfe eines Server 5 realisiert ist, der kabelgebunden mit einem Access-Point 6, der beispielhaft zwei Antennen 7 aufweist, verbunden ist.

Die NFC-Reader 4A-4C sind weiterhin derart modifiziert, dass sie mit dem Access-Point 6 über erste Funksignale F1 gemäß einem proprietären Zeitschlitz-Kommunikationsverfahren im Funkkontakt stehen. Damit lassen sich von dem Server 5 aus z.B. Bildinhalte der Regaletiketten 2A-2K verändern, gegebenenfalls auch zugehörige Statusinformationen von den Regaletiketten 2A-2K abfragen und an den Server 5 übertragen.

Jede der Regalschienen 3 ist an einem individuellen Regalboden 8 an dessen Vorderkante montiert. Die drei dargestellten Regalböden 8 gehören alle zu einem nur sehr schematisch angedeuteten Regal 9. Auf den Regalböden 8 können verschiedene Produkte präsentiert werden, die jedoch im vorliegenden Fall aus Gründen der vereinfachten Darstellung nicht abgebildet sind.

Weiterhin sind die NFC-Reader 4A-4C derart ausgebildet, dass sie mit Hilfe eines zweiten Funksignals F2 ihrerseits mit Energie versorgbar sind. Zu diesem Zweck weist das System 1 einen Versorgungssender 10 auf (auch als Funk-Energiequelle bezeichnet), der dazu ausgebildet ist, mit Hilfe eines fokussierten bzw. gerichteten (zweiten) Funksignals F2 mit einer bestimmten Sendeleistung, wie zum Beispiel 5 W, elektrische Energie an einen Empfänger (also an einen der NFC-Reader 4A-4C) zu übertragen. Ein solcher Versorgungssender 10 weist auch eine Vielzahl von Antennen 10A (hier sind sechs Stück dargestellt) auf, mit deren Hilfe die Richtung der Energieübertragung (letztendlich die Ausbreitung des zweiten Funksignals F2) relativ genau einstellbar ist, so dass das Energie übertragende zweite Funksignale F2 präzise bei dem jeweiligen NFC-Reader 4A-4C ankommt. Diese Energieübertragung ist unter dem Begriff "Power over WiFi" bekannt.

An dieser Stelle sei noch erwähnt, dass aus Gründen der Vereinfachung nur ein einziger Access-Point 6 und ein einziges Regal 9 visualisiert wurden, in einer realen Umgebung eines Supermarkts jedoch eine Vielzahl solcher Systemkomponenten vorhanden sind. Dort würde ein einziger Access-Point 6 eine Gruppe der Regale 9 in seiner Umgebung funktechnisch versorgen.

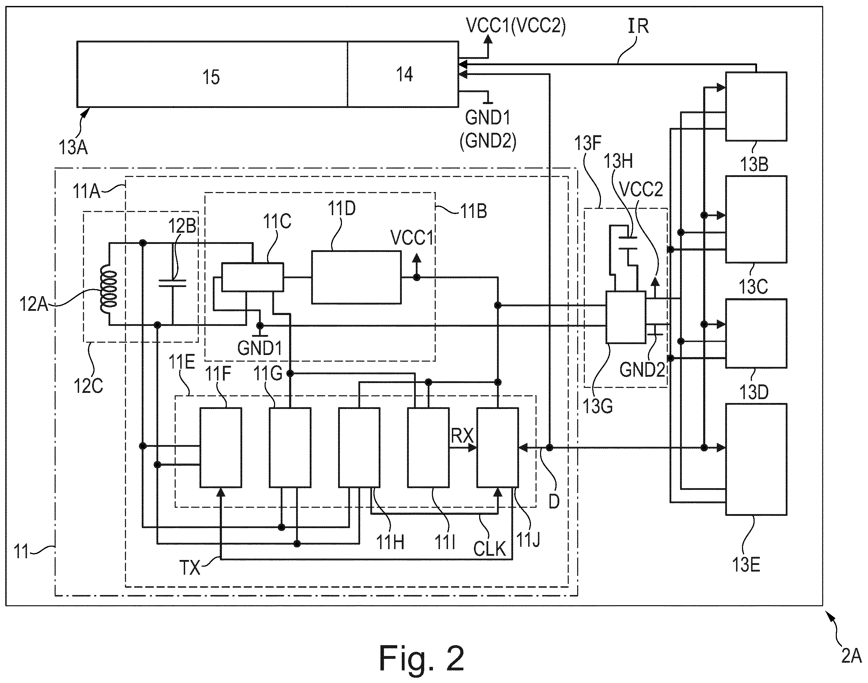

Im Folgenden ist ein Blockschaltbild der Regaletiketten 2A-2K anhand der Figur 2 erörtert. Da im vorliegenden Fall davon ausgegangen wird, dass alle Regaletiketten 2A -2K identisch ausgebildet sind, wird nachfolgend nur auf ein einziges Regaletikett 2A Bezug genommen.

Das Blockschaltbild zeigt ein als erste NFC-Schnittstelle 11 ausgebildetes Kommunikation-Modul des Regaletiketts 2A mit einer Spule 12A, die an eine Schnittstellenschaltung 11A angeschlossen ist. Die Spule 12A bildet zusammen mit einem Schnittstellenkondensator 12B einen Antennenschwingkreis 12C, mit dessen Hilfe ein NFC-Signal eines NFC-fähigen Geräts empfangbar ist. Im vorliegenden Fall handelt es sich bei dem NFC-fähigen Gerät um die NFC-Reader 4A-4C. Die Spule 12A ist in dem Regaletikett 2A möglichst nahe an der Gehäuse-Rückwand im Wesentlichen parallel zu der Gehäuse-Rückwand verbaut. Ist die Spule 12A entsprechend nahe (einige zehntel Millimeter bis ca. 4 Millimeter) an die Leiterschleife L herangebracht, was bei dem an der Regalschiene 3 angebrachten Regaletikett 2A der Fall ist, kann mit Hilfe des Antennenschwingkreises 12C das mit Hilfe der Leitschleife L ausgesandte NFC-Signal empfangen und in dem Regaletikett 2A zur Energieversorgung wie auch zur bidirektionalen Kommunikation von Daten mit der betreffenden NFC-Readern 4A-4C genutzt werden.

Zu diesem Zweck weist das Regaletikett 2A eine an den Antennenschwingkreis 12C angeschlossene sogenannte kontaktlose Leistungsübertragung-Einheit 11B auf, die eingangsseitig eine Gleichrichter-Einheit 11C und ausgangseitig eine Spannungsregler-Einheit 11D aufweist. Damit wird bei Vorliegen des NFC-Signals gegenüber einem ersten Bezugspotenzial GND1 eine erste Versorgungsspannung VCC1 generiert, die dann zum Betrieb der NFC-Funktionalität wie auch weiterer Systemkomponenten des Regaletiketts 2A bereitsteht.

Die erste NFC-Schnittstelle 11 weist weiterhin eine Kommunikation-Einheit 11E auf, mit deren Hilfe die Kommunikation gemäß NFC-Spezifikation bzw. -Protokoll durchführbar ist. Sie weist eine an den Antennenschwingkreis 12C angeschlossenen Lastmodulation-Einheit 11F zur Lastmodulation des empfangenen NFC-Signals in Abhängigkeit von Sendedaten TX auf. Ein weiterer Bestandteil ist eine ebenfalls an den Antennenschwingkreis 12C angeschlossene Schutz-Einheit 11G, die vor einer unerwünscht hohen Eingangsleistung schützt und als Signalbegrenzer ausgebildet ist. Weiterhin ist eine an den Antennenschwingkreis 12C angeschlossene Taktgenerator-Einheit 11H vorgesehen, die auf Grundlage des empfangenen NFC-Signals einen Systemtakt CLK generiert. Eine weitere Komponente bildet eine ASK-Demodulation-Einheit 11I (ASK steht hier für "amplitude-shift keying"), die aus kleinen Schwankungen der Amplitude des mit Hilfe der Gleichrichter-Einheit 11C gleichgerichteten NFC-Signals Empfangsdaten RX generiert. Die digitale Datenverarbeitung erfolgt mit einer Mikro-Controller-Einheit 11J, die mit dem Systemtakt CLK getaktet wird und mit der eingehende Empfangsdaten RX verarbeitet und ausgehende Sendedaten TX generiert werden. Die Datenverarbeitung erfolgt dabei gemäß einem Programmcode, der in der Micro-Controller-Einheit 11J gespeichert ist und mit ihrer Central-Processing-Unit (CPU) abgearbeitet wird.

Das Blockschaltbild zeigt auch eine mit der ersten NFC-Schnittstelle 11 verbundene Anzeige-Einheit 13A, die sich in einen Electronic-Paper-Display-Controller 14 und ein damit steuerbares Electronic-Paper-Display (EPD-Bildschirm) 15 gliedert. Mithilfe des Controllers 14 werden die empfangenen Daten D interpretiert, gegebenenfalls die Bildinhalte des Bildschirms 15 entsprechend verändert oder auch Statusinformationen in Form von Daten D über die erste NFC-Schnittstelle 11 an den jeweiligen NFC-Reader 4A-4C abgegeben.

Das Regaletikett 2A weist im vorliegenden Fall zusätzlich zu der Anzeige-Einheit 13A weitere Verbraucher auf, nämlich eine Eingabe-Einheit 13E zum Empfangen einer Benutzereingabe, eine Kamera-Einheit 13D zum Erfassen von Bildern von Gegenständen vor dem Regaletikett 2A, eine TemperaturSensor-Einheit 13C zur Erfassung der Umgebungstemperatur des Regaletiketts 2A und eine Detektor-Einheit 13B zum Detektieren einer von einer Soll-Positionierung abweichenden Fehl-Positionierung des elektronischen Regaletiketts 2A, wobei bei Detektion der Fehl-Positionierung ein Aktionssignals IR an die Anzeigeeinheit 13A abgegeben wird.

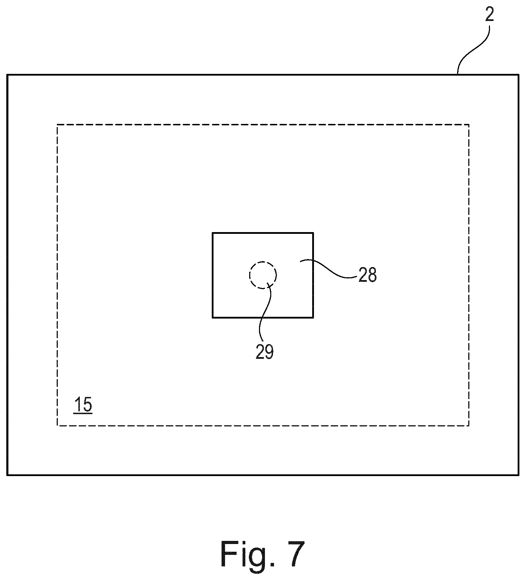

Die Detektor-Einheit 13B weist als Detektorelement eine Fotodiode auf, deren Leitfähigkeit sich in Abhängigkeit der Intensität des Lichts, das sie anstrahlt, verändert. Sie ist im Gehäuse des Regaletiketts 2A so verbaut bzw. integriert, dass sie Licht empfangen kann, das die Rückseite des Gehäuses anstrahlt. So kann das Gehäuse im Zentrum der Rückwand beispielsweise eine Sichtfenster (siehe Figur 7) aufweisen und die Fotodiode ist im Inneren des Regaletiketten-Gehäuses an einer Leiterplatte korrespondierend zu dem Sichtfenster angebracht. Auch kann die Fotodiode in eine Aussparung der Rückwand des Gehäuses eingesetzt sein und außenseitig mit dieser eben abschließen.

Die Detektor-Einheit 13B weist weiterhin eine Detektor-Elektronik auf, die auf besagter Leiterplatte realisiert ist. Die Detektor-Elektronik weist z.B. eine Operationsverstärkerschaltung (abgekürzt OP-Schaltung, z.B. Fotodioden-Verstärker mit nachgeschaltetem Komparator und ggf. nachgeschalteter Signalformungs-Schaltung) auf, mit deren Hilfe ein Überschreiten eines Schwellwerks des Stroms durch die Fotodiode erkannt werden kann. Die Realisierung kann jedoch mit Hilfe eines in einem IC (Integrated Circuit) integrierten Lichtsensors erfolgen.

Die Überschreitung des Schwellwerts ist im vorliegenden Fall ein Anzeichen dafür, dass das Regaletikett 2A von der Regalschiene 3 abgelöst wurde und die nun an der Gehäuse-Rückseite zugängliche Fotodiode mit Licht angestrahlt wird. Die OP-Schaltung gibt daraufhin das Aktionssignal IR an die Anzeige-Einheit 13A ab, konkret an einen Interrupt-Eingang der Anzeige-Einheit 13A, die daraufhin den Inhalt ihres Bildschirms 15 löscht. Dies kann so erfolgen, dass der gegenwärtig angezeigte Bildinhalt durch einen anderen Bildinhalt ersetzt wird, also technisch gesprochen von einem Speicherbereich eines Speichers der Anzeige-Einheit 13A, der den gegenwärtig angezeigten, ersten Bildinhalt in Form von Daten speichert, auf einen anderen Speicherbereich umgeschaltet wird, in dem der nun darzustellende, zweite Bildinhalt in Form von Daten gespeichert ist. Der erste Bildinhalt wurde durch Kommunikation mit dem Server empfangen. Der zweite Bildinhalt, der beim Löschen des Bildschirms 15 zum Einsatz kommt, kann voreingestellt, also z.B. ab Werk programmiert sein oder auch situationsspezifisch durch eine vorangegangene Server-Kommunikation festgelegt sein. Gesteuert wird der Vorgang des Löschens des Bildinhalts durch den Electronic-Paper-Display-Controller 14, der das Aktionssignal IR an seinem Interrupt-Eingang empfängt, was bei ihm einen Interrupt auslöst, was zum Start einer für diese Situation gespeicherten Software führt, und der dann diese Software ausführt, um die erörterten Maßnahmen umzusetzen.

Jede der Einheiten 13B-13E kann in Analogie zu der Anzeige-Einheit 13A ihren eigenen integrierten Controller-Schaltkreis (IC) aufweisen. Diese zusätzlichen Verbraucher 13B-13E sind dazu bestimmt zeitlich losgelöst von der Existenz des NFC-Signals, mit dessen Hilfe wie erörtert die erste Versorgungsspannung VCC1 erzeugt wird, betrieben zu werden.

Zu diesem Zweck weist das Regaletiketten 2A eine Langzeit-Energie-Speicher-Einheit 13F auf, die sich in einen Langzeit-Energiespeicher in Form eines Superkondensators 13H und eine Lade-Stufe 13G, die zum Laden des Superkondensators 13H ausgebildet ist, gliedert, wobei bei Vorliegen des NFC-Signals mit Hilfe der Lade-Stufe 13G elektrische Energie für den Betrieb der zusätzlichen Verbraucher 13B-13E außerhalb einer Zeitspanne des Vorliegens des NFC-Signals in dem Superkondensator 13H gespeichert wird. Die Lade-Stufe 13G ist eingangsseitig an die erste Versorgungsspannung VCC1 gegenüber dem ersten Bezugspotenzial GND1 angeschlossen, also mit dem Ausgang der kontaktlosen Leistungsübertragung-Einheit 11B verbunden. Gemäß einer anderen Ausbildung kann der Superkondensator 13H direkt an den Ausgang der Leistungsübertragung-Einheit 11B angeschlossen sein. In der vorliegenden Ausbildung stellt die Lade-Stufe 13G ausgangsseitig eine zweite Versorgungsspannung VCC2 gegenüber einem zweiten Bezugspotential GND2 bereit, wobei das erste und das zweite Bezugspotential GND1 und GND2 identisch sind, also entsprechende Schaltungspunkte miteinander verbunden sind.

Die beiden Versorgungsspannungen VCC1 und VCC2 können sich hinsichtlich ihres Werts unterscheiden oder gleich sein, was letztendlich von den Spezifikationen der zu versorgenden Verbraucher 13A-13E und/oder vom Ladezustand des Superkondensators 13H abhängt. In diesem Zusammenhang sei erwähnt, dass die Anzeige-Einheit 13A entweder nur mit der ersten Versorgungspannung VCC1 oder nur mit der zweiten Versorgungsspannung VCC2 oder wahlweise, also z.B. in Abhängigkeit davon, ob die erste Versorgungsspannung VCC1 vorliegt oder nicht, entweder mit der ersten Versorgungsspannung VCC1 oder mit der zweiten Versorgungsspannung VCC2 versorgt werden kann.

Auch wenn in der vorliegenden Erörterung davon ausgegangen ist, dass die Regaletiketten 2A-2K alle dieselbe Ausbildung haben, also alle die in der Figur 2 gezeigten Verbraucher 13A-13E aufweisen, sei an dieser Stelle klargestellt, dass dies nicht so sein muss. So können beispielsweise pro Regalschiene 3 nur einige Regaletikett z.B. 2A, 2C, 2D, 2F, 2G und 2I als Regaletikettenanzeige realisiert sein. Andere Regaletiketten z.B. 2B, 2E, 2H und 2J könnten überhaupt keine Anzeige-Einheit 13A aufweisen, dafür jedoch eine Kamera-Einheit und je einen Time-of-Flight-Sensor-Einheit aufweisen und letztendlich könnte das letzte verbliebene Regaletikette 2K nur eine TemperaturSensor-Einheit aufweisen. Grundsätzlich kann hier jedoch jede Kombination der Verbraucher 13A-13E pro Regaletikett 2A-2K vorgesehen sein. Bevorzugt weisen jedoch alle zumindest die Detektor-Einheit 13B auf. Die individuelle Verfügbarkeit des jeweiligen Verbrauchers 13A-13E kann durch eine selektive hardwaremäßige Ausbildung der jeweiligen Verbraucher 13A-13E im jeweiligen Regaletikett 2A-2K realisiert sein. Dies kann auch so realisiert sein, dass einige oder alle Arten von Verbraucher 13A-13E implementiert sind und mit Hilfe von Steuerbefehlen freigeschaltet werden können, also softwaremäßig aktivierbar sind und/oder durch spezielle Ausbildungen des Gehäuses der jeweiligen Regaletiketten 2A-2K verfügbar oder eben nicht verfügbar sind.

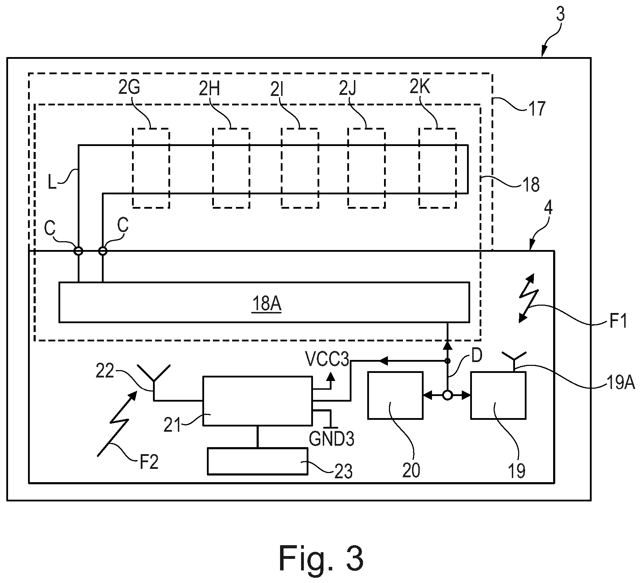

Im Folgenden ist anhand der Figur 3 ein Blockschaltbild der Regalschiene 3 erörtert. Hier wurde das Bezugszeichen 4 für die identisch ausgebildeten NFC-Reader 4A-4C verwendet.

In der Figur 3 ist angedeutet, dass die Regalschiene 3 die Regaletiketten 2G-2K trägt, es sich also um die in der Figur 1 ganz unten dargestellte Regalschiene 3 handelt. Die Regaletiketten 2G-2K sind korrespondierend zu der Position der Leiterschleife L positioniert. Im Unterschied zur Figur 1 ist auch die elektrische Verbindung der Schleifen-Anschlüsse C mit einer Elektronik 18A des NFC-Reader 4 sichtbar. Die Leiterschleife L zusammen mit der zweiten Elektronik 18A bildet eine zweite NFC-Schnittstelle 18 des NFC-Readers 4. Auch hier weist die Elektronik 18A ihren eigenen NFC-Reader-Controller (nicht dargestellt) auf, der die gesamte NFC-Reader-Funktionalität bereitstellt. Mit Hilfe der zweiten NFC-Schnittstelle 18 lässt sich das NFC-Signal generieren und abgeben und damit auf kontaktlose Weise elektrische Energie an die Regaletiketten 2G-2K übertragen und eine bidirektionale Kommunikation von Daten D mit ihnen durchführen.

Hervorgehoben sei an dieser Stelle, dass die Leiterschleife L, obwohl sie ein Bestandteil des NFC-Readers 4 ist, außerhalb des NFC-Readers 4 in der mechanischen Struktur der Regalschiene 3 aufgenommen ist. Dies ist durch eine die Leiterschleife L einfassende und an den NFC-Reader 4 anschließende Struktur 17 der Regalschiene 3 symbolisiert.

Der NFC-Reader 4 weist weiterhin ein Accesspoint-Kommunikationsmodul 19 auf, das zum funkbasierten Kommunizieren mit dem in der Figur 1 dargestellten Access-Point 6 z.B. im 2,4GHz Frequenzband ausgebildet ist. Das Accesspoint-Kommunikationsmodul 19 weist zu diesem Zweck eine dafür ausgebildete Elektronik (nicht im Detail dargestellt) und eine Antennenkonfiguration 19A, die auch mehrere Antennen umfassen kann, auf und bildet die Analogschnittstelle für diese Funk-Kommunikation. Zur Steuerung der internen Abläufe und der Kommunikation gemäß dem erwähnten proprietären Zeitschlitz-Kommunikationsverfahren mit dem Access-Point 6 weist die Versorgung-Einrichtung 4 eine Steuereinheit 20 auf. Die Steuereinheit 20 ist mit Hilfe eines Mikrocontrollers realisiert, der über einen bidirektionalen Datenbus mit der zweiten NFC-Schnittstelle 18 und dem Accesspoint-Kommunikationsmodul 19 verbunden ist.

Zur Realisierung der "Power over WIFI" Energieübertragung weist der NFC-Reader 4 einen zum Empfangen des zweiten Funksignals F2 geeigneten Versorgungsempfänger 21 auf, der mit seiner Antennenkonfiguration 22 (die mehrere Antennen aufweisen kann) und einer Elektronik (nicht im Detail dargestellt) ausgerüstet ist, die dazu ausgebildet ist, das zweite Funksignal F2 zu empfangen und die damit übertragene Energie in einem internen elektrischen Energiespeicher 23 (aufladbare Batterie, Akkumulator oder Supercap usw.) zu speichern und damit eine dritte Versorgungsspannung VCC3 gegenüber einem zweiten Bezugspotential GND3 zur elektrischen Versorgung des NFC-Readers 4 zu generieren.

Die Steuereinheit 20 ist mit ihrem Datenbus auch mit dem Versorgungsempfänger 21 verbunden.

Im Betrieb kann der NFC-Reader 4 beispielsweise mit Hilfe seiner Steuereinheit 20 den Ladezustand des Energiespeichers 23 abfragen bzw. überwachen. Sobald der Ladezustand unter ein bestimmtes Niveau sinkt, kann die Steuereinheit 20 z.B. mit Hilfe des ersten Funksignals F1 eine (Neu-)Aufladung anfordern. Diese Anforderung wird vom Access-Point 6 empfangen und kann je nach Implementierung direkt an den Versorgungsender 10 weitergeleitet werden oder unter Einbeziehung des Servers 5 an den Versorgungssender 10 weitergeleitet werden. Da im System 1 (z.B. dem Server 5) die genaue geographische Position (die dreidimensionalen Koordinaten) jedes der NFC-Reader 4 im Geschäftslokal sowie ihre eindeutige Reader-Kennung bekannt ist, kann der Versorgungsender 10 das zweite Funksignal F2 präzise gerichtet hin zur Position der jeweiligen das Aufladen anfordernden NFC-Readers 4 aussenden. Dort wird das zweite Funksignal F2 empfangen und die damit übertragene Energie zur Aufladung des internen Energiespeichers 23 verwendet.

Die hier beschriebene Regalschiene 3 ist also mit Hilfe ihres NFC-Sub-Systems zur kontaktlosen Kommunikation mit den an ihr installierten Regaletiketten 2A-2K und einem ihr funktechnisch zugeordneten Access-Point 6 und zur kontaktlosen Energiebereitstellung im Sinne von Energiespeicherung für den eigenen Betrieb des NFC-Readers 4 wie auch für die kontaktlose Energieversorgung der jeweiligen Regaletiketten 2A-2K ausgebildet.

An dieser Stelle sei auch erwähnt, dass der Versorgungssender 10 auch in dem Access-Point 6 verbaut sein kann.

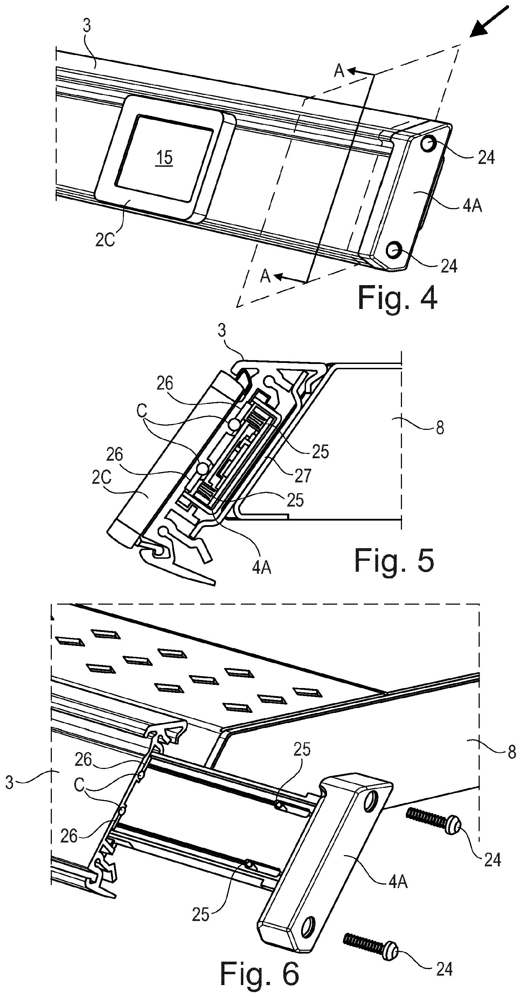

In weiterer Folge ist anhand der Figuren 4-6 auf die Struktur der "intelligenten" Regalschiene 3 eingegangen. So zeigt die Figur 4 eine Regalschiene 3 (in der Figur 1 die oberste Regalschiene 3) mit dem an ihr befestigten Regaletikett 2C und dem seitlich in die Regalschiene 3 eingesetzten NFC-Reader 4A, der mit Schrauben 24 in der Struktur der Regalschiene 3 befestigt ist. Diese Regalschiene 3 weist bespielhaft eine Länge von ca. 3 m, eine Höhe von ca. 4,5 cm und eine Dicke von 1,2 cm auf.

Die Figur 5 zeigt einen Schnitt durch die Regalschiene 3 gemäß einer in der Figur 4 eingezeichneten Schnittfläche A-A, die quer (normal auf die Vorderseite der Regalschiene 3 ausgerichtet) durch die Regalschiene 3 orientiert ist und an jener Stelle verläuft, an der Kontaktelemente 25 des NFC-Readers 4A ausgebildet sind, die zur Kontaktierung der in der Regalschiene 3 verlaufenden Leiterschleife L des NFC-Readers 4A dienen. Die Kontaktelemente 25 kontaktieren in dieser Ansicht Kontaktfahnen 26, die ihrerseits wieder mit den Leiterschleifen-Anschlüssen C in Kontakt stehen. Auf die Kontaktfahnen 26 kann jedoch verzichte werden, wenn eine andere Geometrie gewählt wird, sodass die Leiterschleifen-Anschlüsse C auch direkt mit den Kontaktelementen 25 kontaktiert werden können. Weiterhin ist ein an der Rückseite der Regalschiene 3 ausgebildetes Abschirmblech 27 zu sehen, welches sich analog zur Leiterschleife L ebenfalls entlang der gesamten Regalschiene 3 erstreckt und eine von Umgebungseinflüssen losgelöste Abstimmung der Antennenschwingkreise des NFC-Sub-Systems erlaubt. Deutlich zu sehen ist auch, wie das Regaletikett 2C mit seiner Gehäuse-Rückseite an der Regalschiene 3 bündig anliegt, so dass praktisch kein Umgebungslicht die Gehäuse-Rückseiten des Regaletiketts 2C anstrahlen kann.

Die Figur 6 zeigt den an einem Schienen- bzw. Gleitmechanismus befestigten NFC-Reader 4A, wobei der Gleitmechanismus teilweise aus einem zu seiner Aufnahme ausgebildeten Schacht der Regalschiene 3 herausgezogenen ist.

Die Figur 7 zeigt die Rückseite eines Regaletiketts 2A-2K, hier mit Bezugszeichen 2 gekennzeichnet, mit einem Sichtfenster 28, durch das Licht von der Rückseite des Regaletiketts 2 her durch das Sichtfenster 28 hindurch eindringen und eine auf der Leiterplatte des Regaletiketts 2 befestigte Fotodiode 29 anstrahlen kann, sobald die Rückseite nicht mehr abgedeckt ist.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Elektronisches Regaletikett (2A-2K), das aufweist:
- eine Anzeige-Einheit (13A), die zur Anzeige eines Bildinhalts ausgebildet ist,
- ein Kommunikation-Modul (11), das zur funkbasierten Kommunikation zwecks Empfangs von Bilddaten, welche den Bildinhalt repräsentieren, und zur Übergabe der Bilddaten an die Anzeige-Einheit (13A) ausgebildet ist, und
- eine Detektor-Einheit (13B), die zum Detektieren einer von einer Soll-Positionierung abweichenden Fehl-Positionierung des elektronischen Regaletiketts (2A-2K) und bei Detektion der Fehl-Positionierung zum Abgeben eines Aktionssignals (IR) ausgebildet ist, wobei
- das elektronische Regaletikett (2A-2K) bei Vorliegen des Aktionssignals (IR) zur Veränderung des Bildinhalts ausgebildet ist,
**dadurch gekennzeichnet, dass**
das Regaletikett (2A-2K) dazu ausgebildet ist, den Zustand der Detektion der Fehl-Positionierung digital zu speichern, und erst dann wieder eine Bildinhaltveränderung-Aktivität nach der durch das Detektieren der Fehl-Positionierung erfolgten Veränderung des Bildinhalts durchzuführen, nachdem der gespeicherte Zustand der Detektion der Fehl-Positionierung mit Hilfe einer Kommunikation über das Kommunikation-Modul (11) gelöscht wurde.

2. Regaletikett (2A-2K) nach Anspruch 1, wobei die Detektor-Einheit (13B) eine Fotodiode aufweist.

3. Regaletikett (2A-2K) nach Anspruch 1, wobei die Detektor-Einheit (13B) einen Abstandssensor, englisch "proximity sensor", aufweist.

4. Regaletikett (2A-2K) nach Anspruch 1, wobei die Detektor-Einheit (13B) einen Neigungssensor, englisch "tilt or inclination sensor", aufweist.

5. Regaletikett (2A-2K) nach Anspruch 1, wobei die Detektor-Einheit (13B) einen Laufzeitsensor, englisch "time-of-flight sensor", aufweist.

6. Regaletikett (2A-2K) nach einem der vorangehenden Ansprüche, das einen Langzeit-Energiespeicher (13H) zur elektrischen Versorgung der Detektor-Einheit (13B) während ihrer Detektion-Aktivität aufweist.

7. Regaletikett (2A-2K) nach einem der vorangehenden Ansprüche, das einen Langzeit-Energiespeicher (13H) zur elektrischen Versorgung der Anzeige-Einheit (13A) während ihrer Bildinhaltsveränderung-Aktivität aufweist.

8. Regaletikett (2A-2K) nach Anspruch 6 und/oder 7, wobei das Kommunikation-Modul (11):
- zur funkbasierten Kommunikation gemäß einem Zeitschlitz-Kommunikationsverfahren ausgebildet ist, wobei bei dem Zeitschlitz-Kommunikationsverfahren in sich wiederholender Folge eine Anzahl von Zeitschlitzen pro Zeitschlitzzyklus zur Kommunikation bereitstehen, bevorzugt jeder Zeitschlitz durch ein eindeutiges Zeitschlitzsymbol gekennzeichnet ist, und
- einen energiesparenden Schlaf-Zustand aufweist, in dem keine Kommunikationsbereitschaft zur Kommunikation besteht, und
- einen Aktiv-Zustand aufweist, in dem eine Kommunikationsbereitschaft besteht, und wobei
- das Kommunikation-Modul (11) dazu ausgebildet ist, zeitgerecht zum Auftreten jenes Zeitschlitzes, dem das Regaletikett (2A-2K) zugeordnet ist, von dem Schlaf-Zustand in den Aktiv-Zustand zu wechseln, und
- wobei der Langzeit-Energiespeicher (13H) während des Aktiv- und des Schlaf-Zustands zur elektrischen Versorgung der Detektor-Einheit (13B) zum Einsatz kommt.

9. Regaletikett (2A-2K) nach Anspruch 8, wobei
- der Langzeit-Energiespeicher (13H) während des Schlaf-Zustands zur elektrischen Versorgung der Anzeige-Einheit (13A) während ihrer Bildinhaltsveränderung-Aktivität zum Einsatz kommt.

10. Regaletikett (2A-2K) nach Anspruch 6 und/oder 7, wobei das Kommunikation-Modul (11):
- zur Kommunikation gemäß einer Near-Field-Communcation-, abgekürzt NFC-, Spezifikation ausgebildet ist und bei einem Empfang eines NFC-Signals zum Erzeugen einer Versorgungsspannung (VCC1) für das Regaletikett (2A-2K) ausgebildet ist, wobei der Langzeit-Energiespeicher (13H) während der Abwesenheit des NFC-Signals zur elektrischen Versorgung der Detektor-Einheit (13B) zum Einsatz kommt.

11. Regaletikett (2A-2K) nach Anspruch 10, wobei
- der Langzeit-Energiespeicher (13H) während der Abwesenheit des NFC-Signals zur elektrischen Versorgung der Anzeige-Einheit (13A) während ihrer Bildinhaltsveränderung-Aktivität zum Einsatz kommt.

12. Regaletikett (2A-2K) nach einem der vorangehenden Ansprüche, wobei die Ausbildung zum Verändern des Bildinhalts die Maßnahme aufweist, dass
- die Anzeige-Einheit (13A) zum direkten Empfangen des Aktionssignals (iR), insbesondere als Interrupt-Signal, ausgebildet ist und als Folge des Empfangs des Aktionssignal (IR) zum Löschen des zuletzt angezeigten Bildinhalts ausgebildet ist.

13. Regaletikett (2A-2K) nach einem der vorangehenden Ansprüche, wobei die Ausbildung zum Verändern des Bildinhalts die Maßnahme aufweist, dass
- die Anzeige-Einheit (13A) veranlasst ist, an Stelle des zuletzt dargestellten Bildinhalts eine Nachricht als Bildinhalt darzustellen, welche den internen Zustand der Detektion wiedergibt, insbesondere in Kombination mit einer Handlungsaufforderung.

14. Regaletikett (2A-2K) nach einem der vorangehenden Ansprüche, dessen Detektor-Einheit (13B) dazu ausgebildet ist, den Zustand der Detektion der Fehl-Positionierung digital zu speichern.

15. Regaletiketten-System (1), das zumindest ein elektronisches Regaletikett (2A-2K) nach einem der vorangehenden Ansprüche aufweist.

## Claims

1. An electronic shelf label (2A-2K), comprising:
- a display unit (13A) designed to display image content,
- a communication module (11) designed for radio-based communication for the purpose of receiving image data representing the image content and for transmitting the image data to the display unit (13A), and
- a detector unit (13B) designed to detect an incorrect positioning of the electronic shelf label (2A-2K) deviating from a target position and, upon detection of incorrect positioning, to issue an action signal (IR), wherein
- the electronic shelf label (2A-2K) is designed to change the image content when the action signal (IR) is present,
**characterized in that**
the shelf label (2A-2K) is designed to digitally store the state of the detection of incorrect positioning and only execute a further image content change activity after the image content has been changed due to the detected incorrect positioning, once the stored state of the detection of the incorrect positioning has been cleared with the help of a communication through the communication module (11).

2. The shelf label (2A-2K) according to Claim 1, wherein the detector unit (13B) comprises a photodiode.

3. The shelf label (2A-2K) according to Claim 1, wherein the detector unit (13B) comprises a proximity sensor.

4. The shelf label (2A-2K) according to Claim 1, wherein the detector unit (13B) comprises a tilt or inclination sensor.

5. The shelf label (2A-2K) according to Claim 1, wherein the detector unit (13B) comprises a time-of-flight sensor.

6. The shelf label (2A-2K) according to any one of the preceding claims, which comprises a long-term energy storage unit (13H) for supplying electrical power to the detector unit (13B) during its detection activity.

7. The shelf label (2A-2K) according to any one of the preceding claims, which comprises a long-term energy storage unit (13H) for supplying electrical power to the display unit (13A) during its image content change activity.

8. The shelf label (2A-2K) according to Claim 6 and/or 7, wherein the communication module (11):
- is designed for radio-based communication according to a time-slot communication method, wherein in the case of a time-slot communication method, in a repeating sequence, a number of time slots per time-slot cycle are available for communication, preferably with each time slot identified by a unique time-slot symbol, and
- comprises an energy-saving sleep state, in which there is no communication readiness, and
- comprises an active state, in which there is communication readiness, and wherein
- the communication module (11) is designed to switch from the sleep state to the active state in a timely manner before the occurrence of the time slot assigned to the shelf label (2A-2K), and
- wherein the long-term energy storage unit (13H) is used to electrically power the detector unit (13B) during the active and sleep states.

9. The shelf label (2A-2K) according to Claim 8, wherein
- the long-term energy storage unit (13H) is used during the sleep state to electrically power the display unit (13A) during its image content change activity.

10. The shelf label (2A-2K) according to Claim 6 and/or 7, wherein the communication module (11):
- is designed for communication according to a Near-Field Communication, abbreviated to NFC specification, and upon receiving an NFC signal, is designed to generate a supply voltage (VCC1) for the shelf label (2A-2K), wherein the long-term energy storage unit (13H) is used to electrically power the detector unit (13B) in the absence of the NFC signal.

11. The shelf label (2A-2K) according to Claim 10, wherein
- the long-term energy storage unit (13H) is used to electrically power the display unit (13A) during its image content change activity in the absence of the NFC signal.

12. The shelf label (2A-2K) according to any one of the preceding claims, wherein the image content change function comprises the measure that:
- the display unit (13A) is designed to receive the action signal (iR) directly, particularly as an interrupt signal, and, as a result of receiving the action signal (IR), the display unit is designed to delete the image content last displayed.

13. The shelf label (2A-2K) according to any one of the preceding claims, wherein the design for changing the image content comprises the measure that
- the display unit (13A) is configured to display a message as image content instead of the last displayed image content, which reflects the internal state of the detection, particularly in combination with an action prompt.

14. The shelf label (2A-2K) according to any one of the preceding claims, whereof the detector unit (13B) is designed to digitally store the detection state of the incorrect positioning.

15. A shelf label system (1) comprising at least one electronic shelf label (2A-2K) according to any one of the preceding claims.

## Revendications

1. Étiquette électronique de gondole (2A-2K), qui présente :
- une unité d'affichage (13A), qui est conçue pour afficher un contenu d'image,
- un module de communication (11), qui est conçu pour la communication radio afin de recevoir des données d'image, qui représentent le contenu de l'image et de transférer les données d'image à l'unité d'affichage (13A), et
- une unité de détection (13B), qui est conçue pour détecter un positionnement incorrect de l'étiquette électronique de gondole (2A-2K) différant d'un positionnement correct et pour émettre un signal d'action (IR) lors de la détection d'un positionnement incorrect, dans lequel
- l'étiquette électronique (2A-2K) lorsque le signal d'action (IR) est présent est conçue pour modifier le contenu de l'image,
**caractérisée en ce que**
l'étiquette de gondole (2A-2K) est conçue pour mémoriser numériquement l'état de détection du positionnement incorrect, et seulement ensuite effectuer une activité de modification du contenu de l'image après la modification du contenu d'image survenue lors de la détection du positionnement défectueux, après que l'état enregistré de la détection du positionnement incorrect a été supprimé au moyen d'une communication via le module de communication (11).

2. Étiquette de gondole (2A-2K) selon la revendication 1, dans laquelle l'unité de détection (13B) présente une photodiode.

3. Étiquette de gondole (2A-2K) selon la revendication 1, dans laquelle l'unité de détection (13B) présente un capteur de proximité.

4. Étiquette de gondole (2A-2K) selon la revendication 1, dans laquelle l'unité de détection (13B) présente un capteur d'inclinaison.

5. Étiquette de gondole (2A-2K) selon la revendication 1, dans laquelle l'unité de détection (13B) présente un capteur de temps de vol.

6. Étiquette de gondole (2A-2K) selon une des revendications précédentes, qui présente un dispositif de stockage d'énergie à long terme (13H) pour alimenter électriquement l'unité de détection (13B) pendant son activité de détection.

7. Étiquette de gondole (2A-2K) selon une des revendications précédentes, qui présente un stockage d'énergie à long terme (13H) pour l'alimentation électrique de l'unité d'affichage (13A) pendant son activité de modification de contenu d'image.

8. Étiquette de gondole (2A-2K) selon la revendication 6 et/ou 7, dans laquelle le module de communication (11) :
- est conçu pour une communication radio basée sur un, dans laquelle dans le cadre du procédé de communication par créneau horaire, un certain nombre de créneaux horaires par cycle de créneau horaire sont disponibles pour la communication dans une séquence répétitive, de préférence chaque créneau horaire est identifié par un symbole de créneau horaire unique, et
- dispose d'un état de veille à économie d'énergie dans lequel il n'y a aucune volonté de communiquer, et
- dispose d'un état actif dans lequel il y a une volonté de communiquer, et
- le module de communication (11) est conçu pour, à temps pour l'apparition du créneau horaire auquel l'étiquette de gondole (2A-2K) est attribuée, passer de l'état de veille à l'état actif, et
- dans lequel le dispositif de stockage d'énergie à long terme (13H) est utilisé pendant les états actif et de veille pour alimenter l'unité de détection (13B) en électricité.

9. Étiquette de gondole (2A-2K) selon la revendication 8, dans laquelle
- le dispositif de stockage d'énergie à long terme (13H) est utilisé pendant l'état de veille pour l'alimentation électrique de l'unité d'affichage (13A) pendant son activité de modification de contenu d'image.

10. Étiquette de gondole (2A-2K) selon la revendication 6 et/ou 7, dans laquelle le module de communication (11) :
- est conçu pour la communication selon une spécification Near-Field Communication, abrégée NFC, et est conçu pour générer une tension d'alimentation (VCC1) pour l'étiquette de gondole (2A-2K) lors de la réception d'un signal NFC, dans laquelle le dispositif de stockage d'énergie à long terme (13H) est utilisé en l'absence du signal NFC pour alimenter l'unité de détection (13B).

11. Étiquette de gondole (2A-2K) selon la revendication 10, dans laquelle
- le dispositif de stockage d'énergie à long terme (13H) en l'absence du signal NFC est utilisé pour l'alimentation électrique de l'unité d'affichage (13A) pendant son activité de modification du contenu d'image.

12. Étiquette de gondole (2A-2K) selon une quelconque des revendications précédentes, dans laquelle la conception pour modifier le contenu d'image présente la mesure selon laquelle
- l'unité d'affichage (13A) est conçue pour recevoir directement le signal d'action (iR), notamment en tant que signal d'interruption, et est conçue, suite à la réception du signal d'action (IR), pour supprimer le dernier contenu d'image affiché.

13. Étiquette de gondole (2A-2K) selon une quelconque des revendications précédentes, dans laquelle la conception pour modifier le contenu de l'image présente la mesure selon laquelle
- l'unité d'affichage (13A) est agencée pour afficher un message sous forme de contenu d'image à la place du dernier contenu d'image affiché, lequel message reflète l'état interne de la détection, notamment en combinaison avec une demande d'action.

14. Étiquette de gondole (2A-2K) selon une des revendications précédentes, dont l'unité de détection (13B) est conçue pour mémoriser numériquement l'état de la détection du positionnement incorrect.

15. Système d'étiquettes de gondole (1), qui présente au moins une étiquette de gondole électronique (2A-2K) selon une des revendications précédentes.
